# EUROPEAN PATENT SPECIFICATION

(11) **EP 3 582 549 B1**
(45) Date of publication and mention of the grant of the patent: **23.12.2020**
(21) Application number: 17896869.9
(22) Date of filing: 15.02.2017
(51) Int. Cl.: H04W 36/14, H04W 48/02, H04W 88/06

(54) **NETWORK CONNECTION METHOD AND APPARATUS**
NETZWERKVERBINDUNGSVERFAHREN UND -VORRICHTUNG
APPAREIL ET PROCÉDÉ DE CONNEXION RÉSEAU

(43) Date of publication of application: 18.12.2019
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2017/073641
(87) International publication number: WO 2018/148890

(56) References cited:
- CN-A- 103 024 843
- CN-A- 103 024 843
- CN-A- 103 024 844
- CN-A- 103 856 997
- CN-A- 103 856 997
- US-A1- 2015 257 066
- US-A1- 2016 165 508

## Description

### TECHNICAL FIELD

The disclosure relates to the technical field of terminals, and particularly to a network connection method and device. The features of the preamble of the independent claims are known from US2015/257066A1, CN103024843A, and CN103856997 A.

### BACKGROUND

At present, a terminal such as a smart phone and a tablet computer may be connected to a network and process various types of data services through the network. The network that the terminal is connected to may be a cellular network or a non-cellular network such as a Wireless Local Area Network (WLAN), and when the terminal moves to a coverage area of the non-cellular network in a process of access to the cellular network, the terminal may automatically perform a handover of a network access mode from the cellular network to the non-cellular network, thereby implementing network connection through the non-cellular network.

The network connection may usually be temporarily interrupted during the handover of the network access mode, and if a user is playing an online video or processing a data service such as video communication through the terminal, the data service may be interrupted, which may bring inconvenience to the user and thus reduce a network experience of the user. For example, the non-cellular network is a WLAN. For solving the problem of network interruption during handover of the network access mode, the handover of the network access mode is usually achieved by integrating an Access Network Discovery Selection Function (ANDSF) technology, Hotspot2.0 (wireless hotspot), a Long Term Evolution (LTE) technology and the WLAN or interoperating the LTE with the WLAN.

However, because of excessive complexity, high requirement on a coupling degree between the cellular network and a WLAN system and the like of a technology for integrating the ANDSF technology, Hotspot2.0, the LTE technology and the WLAN or implementing interoperation on LTE and the WLAN, the technology may usually be applied to a self-supporting WLAN of a cellular network operating company, and an application scope of the technology is limited.

### SUMMARY

The invention is defined by the independent claims. In order to avoid interruption of a service state of a data service during handover of a network access mode, the embodiments of the disclosure provide a network connection method according to claim 1 and a network connection device according to claim 6. Preferred embodiments are defined in the dependent claims.

The technical solutions provided in the embodiments of the disclosure have the following beneficial effects. In the embodiments of the disclosure, when the radio signal of the accessible non-cellular network is detected during network connection through the cellular network, it may be determined whether the service state of the presently processed data service meets the first preset condition, to avoid interruption of the data service due to handover of the network access mode. The first preset condition is the condition that does not influence service quality of the data service during the handover of the network access mode, so that network connection may be performed based on the radio signal when the service state meets the first preset condition, thereby ensuring the present data service to be performed smoothly.

### BRIEF DESCRIPTION OF DRAWINGS

In order to describe the technical solutions of the embodiments of the disclosure more clearly, the drawings required to be used in descriptions about the embodiments will be simply introduced below. It is apparent that the drawings described below are only some embodiments of the disclosure. Other drawings may further be obtained by those of ordinary skill in the art according to these drawings without creative work.
FIG. 1 is a flowchart of a network connection method according to an embodiment of the disclosure.
FIG. 2A is a structure diagram of a first network connection device according to an embodiment of the disclosure.
FIG. 2B is a structure diagram of a determination module according to an embodiment of the disclosure.
FIG. 2C is a structure diagram of a second network connection device according to an embodiment of the disclosure.
FIG. 2D is a structure diagram of a third network connection device according to an embodiment of the disclosure.
FIG. 2E is a structure diagram of a fourth network connection device according to an embodiment of the disclosure.
FIG. 2F is a structure diagram of a fifth network connection device according to an embodiment of the disclosure.
FIG. 2G is a structure diagram of a first connection module according to an embodiment of the disclosure.
FIG. 2H is a structure diagram of another first connection module according to an embodiment of the disclosure.
FIG. 3 is a structure diagram of a terminal according to an embodiment of the disclosure.

### DETAILED DESCRIPTION

In order to make the object, technical solutions and advantages of the disclosure clearer, the implementations of the disclosure will further be described below in combination with the drawings in detail.

"Module" mentioned in the disclosure usually refers to a process or instruction stored in a memory and capable of realizing some functions. "Submodule" mentioned in the disclosure usually refers to a functional structure which is logically divided. A "submodule" may be implemented completely by hardware or implemented by a combination of software and the hardware.

"Multiple" mentioned in the disclosure refers to two or more than two. Term "and/or" is an association relationship describing associated objects and represents that three relationships may exist. For example, A and/or B may represent three conditions: i.e., independent existence of A, existence of both A and B and independent existence of B. Character "/" usually represents that previous and next associated objects form an "or" relationship.

Before the embodiments of the disclosure are explained and described in detail, an application scenario of the embodiments of the disclosure is introduced at first. At present, when a terminal moves to a coverage area of an accessible non-cellular network during connection to a cellular network, the terminal may automatically perform a handover of a network access mode from the cellular network to the non-cellular network. However, since a network connection may usually be temporarily interrupted during handover of the network access mode, if a user is processing a data service through the terminal, the data service may be interrupted and inconvenience may be brought to the user. For example, if the handover of the network access mode is performed when the terminal is playing an online video or processing video communication through the cellular network, playing of the online video may be interrupted, or, the video communication may be interrupted. However, a technology for solving this problem is too complex and there are too many limitations to application of the technology, so that handover efficiency of the network access mode is low. Therefore, the embodiments of the disclosure provide a network connection method, which may avoid interruption of the data service due to handover of the network access mode, and further ensure the present data service to be performed smoothly.

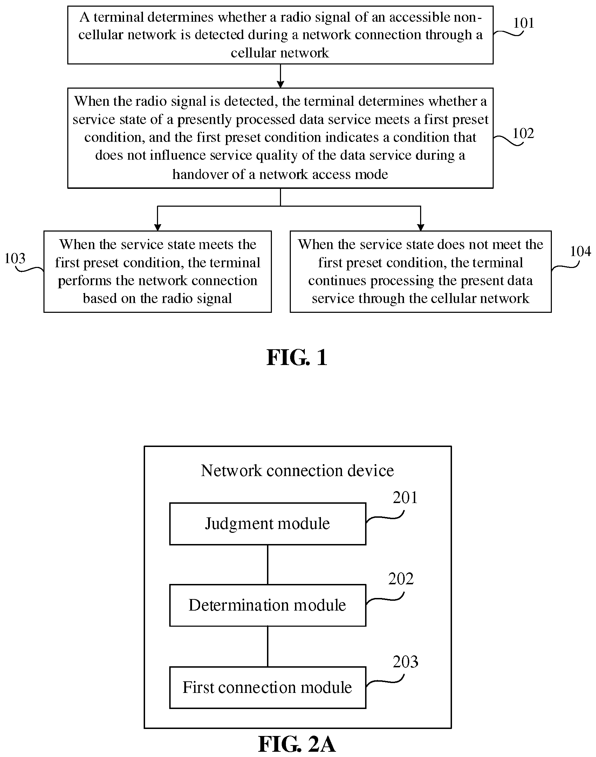

FIG. 1 is a flowchart of a network connection method according to an embodiment of the disclosure. Referring to FIG. 1, the method includes the following operations.

In 101, a terminal determines whether a radio signal of an accessible non-cellular network is detected during a network connection through a cellular network.

The radio signal may be a Wireless Fidelity (WIFI) signal, and may also be another radio signal of the non-cellular network.

The operation that the terminal determines whether the radio signal of the accessible non-cellular network is detected may make reference to a related art, which will not be elaborated in the embodiment of the disclosure.

In addition, when the radio signal is detected, because the terminal determines whether to perform network connection based on the radio signal according to operations in 102-103, the handover of a network access mode may not be occurred. However, for reducing consumption of the cellular network, a user may eagerly expect to perform handover of the network access mode, and in such case, the terminal may also prompt the user that the radio signal has been detected in a manner of vibration, ringing, box popup and the like, so that the user may manually perform the handover of the network access mode when receiving such prompting information.

In 102, when the radio signal is detected, the terminal determines whether a service state of a presently processed data service meets a first preset condition, and the first preset condition indicates a condition that does not influence service quality of the data service during a handover of a network access mode.

The data service refers to a service that the terminal may process through the network, for example, a voice call, a video call and video playing uploading or downloading. The service state refers to a state of the terminal when the data service is processed. In addition, the first preset condition may be set in advance. For example, the first preset condition may include at least one of the cases that no network data is presently transmitted, no specified application program is presently running, or there is no network data to be transmitted presently.

The operation that the terminal determines whether the service state of the presently processed data service meets the first preset condition may include at least one of the following manners.

First manner: when determining through the service state that the network data is not presently transmitted, the terminal determines that the service state meets the first preset condition.

When the terminal does not presently transmit the network data, network interruption caused by handover of the network access mode may have no effect on the terminal. Therefore, when the terminal determines, through the service state, that no network data is presently transmitted, the terminal may determine that the service state meets the first preset condition.

It is to be noted that the network data may include video data, audio data, image data and the like transmitted by the terminal through the network. The case that the network data is not presently transmitted may indicate that the terminal does not presently transmit any data through the cellular network. For example, the case that the terminal does not presently transmit the network data may include that the terminal does not presently make a voice call through the network, does not make a video call through the network, does not perform video playing or video downloading through the network or the like.

Second manner: when the terminal determines through the service state that the network data is presently being transmitted, if the network data meets a second preset condition, the terminal determines that the service state meets the first preset condition.

When the terminal determines, through the service state, that the network data is presently being transmitted, the network data transmitted presently may not be data that is valued by the user and, for the user, there is no influence on an network experience in case of network interruption. Therefore, for further determining whether the service state meets the first preset condition, the terminal may further determine whether the network data meets the second preset condition, and a specific operation may include at least one of the following manners (1)-(3).
(1) In condition that a data type of the network data is not a specified type, it is determined that the service state meets the first preset condition.
(2) In condition that the network data is not data of the specified application program, it is determined that the service state meets the first preset condition.
(3) In condition that a transmission rate of the network data is less than a preset rate threshold, it is determined that the service state meets the first preset condition.

It is to be noted that the specified type may be a preset type. For example, the specified type may be a video, an audio, an image or the like. The specified application program may also be preset. For example, the specified application program may be an instant messaging application and a video playing application. The number of the specified application program may be one and may also be multiple. The preset rate threshold may also be preset. For example, the preset rate threshold may be 20 bits/second and 30 bits/second.

Third manner: when the terminal determines through the service state that an application program is presently running, if the application program is not a specified application program, the terminal determines that the service state meets the first preset condition.

When the terminal determines, through the service state, that the application program is presently running, only the presently running application program may be influenced by network interruption caused due to handover of the network access mode, and if the application program is not the specified application program, the specified application program may not be influenced by the network interruption. Therefore, when the terminal determines, through the service state, that the application program is presently running and the application program is not the specified application program, the terminal may determine that the service state meets the first preset condition.

For example, when the specified application program is the video playing application and the presently-running application program is the instant messaging application, it is determined that the service state meets the first preset condition.

Fourth manner: when the terminal determines through the service state that there is no network data to be transmitted presently, the terminal determines that the service state meets the first preset condition.

It is to be noted that the network data to be transmitted may be network data transmitted from the transmission start time and the network data to be transmitted may include cache data of an operating system of the terminal, cache data of the specified application program, cache data of a cellular network modem and the like.

When the terminal determines, through the service state, that there is no network data to be transmitted presently, no matter whether network interruption may occur, there is no influence on the terminal. Therefore, when determining, through the service state, that there is no network data to be transmitted presently, the terminal may determine that the service state meets the first preset condition.

Fifth manner: when the terminal determines through the service state that there is the network data to be transmitted presently, if a transmission time interval between present time and the transmission start time of the network data to be transmitted is longer than a preset time interval, the terminal determines that the service state meets the first preset condition.

When the transmission time interval between the present time and the transmission start time of the network data to be transmitted is longer than the preset time interval, subsequent transmission of the network data may not be influenced by temporary network interruption due to handover of the network access mode. Therefore, when the transmission time interval is longer than the preset time interval, it is determined that the service state meets the first preset condition.

It is to be noted that the preset time interval may be set in advance. For example, the preset time interval is 30 seconds, 1 minute, 2 minutes or the like.

Sixth manner: when the terminal determines through the service state that a specified webpage is not presently opened, the terminal determines that the service state meets the first preset condition.

When the terminal determines, through the service state, that the specified webpage is not presently opened, the specified webpage may not be influenced by network interruption caused due to handover of the network access mode. Therefore, it may be determined that the service state meets the first preset condition.

It is to be noted that the specified webpage may be preset. For example, the specified webpage may be a shopping webpage, an official website of a bank or the like.

For example, when the specified webpage is the shopping webpage and the presently-opened webpage is a game webpage, the terminal determines that the service state meets the first preset condition.

Seventh manner: when the terminal determines through the service state that the specified webpage has presently been opened, if a page state of the specified webpage is not presently a specified state, the terminal determines that the service state meets the first preset condition.

When the terminal determines, through the service state, that the specified webpage has presently been opened, the specified webpage may not be influenced by temporary network interruption. Therefore, the terminal may further determine whether the service state meets the first preset condition according to the page state of the specified webpage. In addition, the specified state may be preset. For example, the specified state may be an unpaid state for online shopping, an unconfirmed state of an online banking service or the like.

It is to be noted that, based on a determination result of the at least one manner, when the service state meets the first preset condition, the terminal may execute the operation in 203.

In addition, the operation that the terminal determines that the service state does not meet the first preset condition may include at least one of the following manners.

First manner: when the terminal determines through the service state that the network data is presently being transmitted, if the network data presently being transmitted does not meet the second preset condition, the terminal determines that the service state does not meet the first preset condition.

The presently-transmitted network data may not be the data that is valued by the user, and for the user, there is no influence on the network experience in case of network interruption. When the network data is important data, the network interruption may bring relatively great influence and the network experience of the user is poor. Therefore, the terminal may further determine whether the presently-transmitted network data meets the second preset condition, and when the presently-transmitted network data does not meet the second preset condition, the terminal determines that the service state does not meet the first preset condition. The operation that the terminal determines that the presently-transmitted network data does not meet the second preset condition to determine that the service state does not meet the first preset condition may include at least one of the following manners (1)-(3).
(1) In condition that the data type of the network data is not the specified type, it is determined that the service state does not meet the first preset condition.
(2) In condition that the network data is not the data of the specified application program, it is determined that the service state does not meet the first preset condition.
(3) In condition that the transmission rate of the network data is less than the preset rate threshold, it is determined that the service state does not meet the first preset condition.

It is to be noted that, when the terminal determines through the service state that the network data is presently being transmitted, the terminal may further directly determine that the service state does not meet the first preset condition. However, if the terminal directly determines that the service state does not meet the first preset condition, the terminal may not perform handover of the network access mode and may still transmit the network data through the cellular network. If the terminal presently executes a network-consuming data service such as video downloading, it may cause waste to the cellular network. Therefore, under a normal condition, the terminal may determine, through the operation in the first manner, that the service state does not meet the first preset condition, and consumption of the cellular network is reduced.

Second manner: when the terminal determines through the service state that the application program is presently running, if the application program is the specified application program, the terminal determines that the service state does not meet the first preset condition.

When the terminal determines, through the service state, that the application program is presently running, the presently running application program may be influenced by network interruption caused due to handover of the network access mode, and if the application program is the specified application program, the specified application program may be influenced by the network interruption. Therefore, when the terminal determines, through the service state, that the application program is presently running and determines that the application program is the specified application program, it may be determined that the service state does not meet the first preset condition.

For example, when the specified application program is the video playing application and the presently running application program is the video playing application, it is determined that the service state does not meet the first preset condition.

Third manner: when the terminal determines, through the service state, that there is network data to be transmitted presently and determines that the transmission time interval is less than or equal to the preset time interval, transmission of the network data to be transmitted may be influenced by temporary network interruption caused due to handover of the network access mode. Therefore, when the transmission time interval is less than or equal to the preset time interval, it is determined that the service state does not meet the first preset condition.

For example, when the transmission start time is the present time and the specified time interval is 30 seconds, the network data may not be transmitted if the network access mode is handed over at this time. Therefore, it is determined that the service state does not meet the first preset condition.

It is to be noted that, when the terminal determines, through the service state, that there is the network data to be transmitted presently, the terminal directly determines that the service state does not meet the first preset condition. However, if the terminal directly determines that the service state does not meet the first preset condition, the terminal may not perform handover of the network access mode and may still process another data service through the cellular network, which brings waste to the cellular network. In addition, when the transmission time interval is longer than the preset time interval, no matter whether network interruption occurs, subsequent transmission of the network data to be transmitted may not be influenced. Therefore, under a normal condition, the terminal may determine, through the operation in the third manner, that the service state does not meet the first preset condition, and the consumption of the cellular network is reduced.

Fourth manner: when the terminal determines, through the service state, that the specified webpage is presently opened, temporary network interruption has less effect on the specified webpage and may not influence a subsequent operation of the terminal on the specified webpage. Therefore, the terminal may continue determining whether the page state of the specified webpage is the specified state. When the page state of the specified webpage is presently the specified state, the terminal determines that the service state does not meet the first preset condition.

It is to be noted that, when the terminal determines, through the service state, that the specified webpage is presently opened, the terminal may directly determine that the present service state does not meet the first preset condition. When the terminal determines, through the service state, that the specified webpage is presently opened, temporary network interruption has less effect on the specified webpage, and if the terminal directly determines that the present service state does not meet the first preset condition, the terminal may not perform handover of the network access mode and may still process another data service through the cellular network, which may bring waste to the cellular network. Therefore, under a normal condition, the terminal may determine, through the operation in the fourth manner, that the service state does not meet the first preset condition, and the consumption of the cellular network is reduced.

It is to be noted that, based on a determination result of the at least one manner, when the service state does not meet the first preset condition, the terminal may execute an operation in 204.

In 103, when the service state meets the first preset condition, the terminal performs the network connection based on the radio signal.

When the service state meets the first preset condition, the terminal may directly perform network connection based on the radio signal. A network state of the non-cellular network is sometimes poor, so that the efficiency of processing the data service is reduced after the terminal is connected to the non-cellular network. In another example, there may also be the case that the data service may not be processed after the terminal is connected to the non-cellular network. Therefore, for avoiding the above cases, the operation that the terminal performs network connection based on the radio signal when the service state meets the first preset condition may further include the following two manners.
(1) When the service state meets the first preset condition, the terminal may be attached or associated to the non-cellular network based on the radio signal. In case of not disconnecting the cellular network, the terminal determines whether the data service can be processed through the non-cellular network. When the data service can be processed, the terminal perform handover of the network access mode from the cellular network to the non-cellular network and perform network connection based on the radio signal.
   The terminal, in case of not disconnecting the cellular network, may transmit the data through the non-cellular network, and determines whether the data may be successfully transmitted. When the data may be successfully transmitted, it is determined that the terminal may process the data service through the non-cellular network. When the data may not be successfully transmitted, it is determined that the terminal may not process the data service through the non-cellular network.
   It is to be noted that the terminal may use the above manners to determine whether the data service may be processed through the non-cellular network in case of not disconnecting the cellular network, and the terminal may also use other manners to make such a determination.
   It is to be noted that, in the first manner, the case that the data service may not be processed after the terminal is connected to the non-cellular network may be avoided. Therefore, the network experience of the user is improved.
   In addition, when the terminal determines that the data service may not be processed through the non-cellular network, network handover is not performed.
(2) When the service state meets the first preset condition, the terminal may acquire a network state, and the network state includes at least one of present signal strength of the cellular network, a present transmission speed of the cellular network or present signal strength of the radio signal. The terminal determines whether the network state meets a third preset condition, and the third preset condition includes at least one of the present signal strength of the cellular network being less than a first preset strength threshold, the present transmission speed of the cellular network being less than a preset transmission speed or the present signal strength of the radio signal being more than a second preset strength threshold. When the network state meets the third preset condition, the terminal performs handover of the network access mode from the cellular network to the non-cellular network and performs network connection based on the radio signal.

When the signal strength or transmission speed of the cellular network is low, the present efficiency of processing data service by the terminal may be influenced, thereby reducing the network experience of the user. In addition, when the signal strength of the non-cellular network is low, if the terminal accesses the non-cellular network under the low signal strength, network interruption may subsequently occur, which disables the terminal to process the data service and also reduces the network experience of the user. Therefore, when the service state meets the first preset condition, the terminal may also acquire the network state and further determine whether to perform network connection based on the radio signal according to the network state.

It is to be noted that the first preset strength threshold may be set in advance. For example, the first preset strength threshold may be 30db (decibels) and 40db. The second preset strength threshold may also be set in advance. For example, the second preset strength threshold may be 50db and 60db. The preset transmission speed may also be set in advance. For example, the preset transmission speed may be 20kb/s and 30kb/s.

In addition, during a practical application, the network state may include at least one of the present signal strength of the cellular network, the present transmission speed of the cellular network or the present signal strength of the radio signal, and the network state may further include a mode of the cellular network, a mode of the non-cellular network and the like. The mode of the cellular network may include 4th-Generation (4G) LTE, 3rd-Generation (3G) Wideband Code Division Multiple Access (WCDMA)/Time Division-Synchronous Code Division Multiple Access (TD-SCDMA)/Code Division Multiple Access 2000 (CDMA2000) or the like. The mode of the non-cellular network may include Institute of Electrical and Electronics Engineers 802.11a/b/g/n/ac/ad (IEEEIEEE802.11a/b/g/n/ac/ad) or the like.

When the network state includes the mode of the cellular network and the mode of the non-cellular network, it is determined whether the mode of the cellular network is matched with the mode of the non-cellular network corresponding to the radio signal according to a stored matching relationship between the modes of the cellular network and the modes of the non-cellular network. When the mode of the cellular network is matched with the mode of the non-cellular network corresponding to the radio signal, the network access mode is switched from the cellular network to the non-cellular network, and network connection is performed based on the radio signal.

It is to be noted that the matching relationship between the modes of the cellular network and the modes of the non-cellular network may be preset. For example, the matching relationship between the modes of the cellular network and the modes of the non-cellular network includes that 4G LTE of the cellular network is matched with IEEE802.11ac of the non-cellular network, 3G WCDMA of the cellular network is matched with IEEE802.11g of the non-cellular network or the like.

For example, when the mode of the cellular network is 4G LTE, the mode, matched with the mode 4G LTE of the cellular network, of the non-cellular network is IEEE802.11ac. If the mode of the non-cellular network corresponding to the radio signal is IEEE802.11ac, the terminal determines that the mode of the cellular network is matched with the mode of the non-cellular network, performs handover of the network access mode from the cellular network to the non-cellular network and performs network connection based on the radio signal.

In 104, when the service state does not meet the first preset condition, the terminal does not perform handover of the network access mode and continues processing the present data service through the cellular network.

When the service state does not meet the first preset condition, if the terminal directly perform handover of the network access mode, the network may be interrupted, which will influence data service processing of the terminal. Therefore, when the service state does not meet the first preset condition, the terminal may continue processing the present data service, without performing network connection through the radio signal.

Furthermore, to avoid cellular network consumption for the user and improving the network experience of the user, when the service state does not meet the first preset condition, the terminal may further perform network connection based on the radio signal in at least one of the following conditions.

First condition: when the service state does not meet the first preset condition and the terminal determines, through the service state, that the network data is presently being transmitted or there is the network data to be transmitted, a transmission process of the network data is monitored. When it is monitored that transmission of the network data is ended or when a transmission cycle of the network data is longer than a preset transmission cycle, network connection is performed based on the radio signal.

When transmission of the network data is completed, network interruption may bring no influence. Therefore, the terminal, when monitoring that transmission of the network data is ended, may perform network connection based on the radio signal. In addition, when the transmission cycle of the data is long, it is indicated that transmission of the network data is substantially completed. In such case, transmission of the network data may not be influenced by the network interruption. Therefore, in the embodiments of the disclosure, network connection may be performed based on the radio signal when the transmission cycle of the network data is longer than the preset transmission cycle.

It is to be noted that the preset transmission cycle may be set in advance. For example, the preset transmission cycle may be 100ms (milliseconds), 200ms or the like.

Second condition: when the service state does not meet the first preset condition and the terminal determines, through the service state, that the specified application program is presently running, a running state of the specified application program may be monitored. When it is monitored that the specified application program stops running, network connection is performed based on the radio signal.

It is to be noted that the operation that the terminal monitors the running state of the specified application program may make reference to the related art, which will not be elaborated in the embodiments of the disclosure.

Third condition: when the service state does not meet the first preset condition and the terminal determines, through the service state, that the specified webpage has presently been opened and the page state of the specified webpage is presently the specified state, the page state of the specified webpage is monitored. When it is monitored that the page state of the specified webpage is not the specified state, network connection is performed based on the radio signal.

It is to be noted that, through at least one of the above conditions, the terminal may not interrupt the presently processed data service but perform network connection based on the radio signal after the presently processed data service is ended, thereby avoiding data service interruption caused by handover of the network access mode, ensuring successful processing of the present data service and improving the network experience of the user. In addition, the terminal may also reduce the consumption of the cellular network for subsequent network access.

Furthermore, when the service state does not meet the first preset condition, the terminal may be attached or associated to the non-cellular network based on the radio signal, and continue monitoring the service state. Responsive to monitoring that the service state meets the first preset condition, the terminal may perform network connection.

The terminal may monitor the service state in real time, and may also monitor the service state after keeping determining that the service state does not meet the first preset condition for a specified duration. The operation in 102 is re-executed to determine whether the service state meets the first preset condition. The specified duration may be preset. For example, the specified duration may be 1 minute, 5 minutes, 10 minutes or the like.

It is to be noted that the terminal is attached or associated to the non-cellular network based on the radio signal, and then continues performing network connection when the service state meets the first preset condition, without the need to re-execute an association or attachment operation. Therefore, a network connection speed is increased.

In the embodiments of the disclosure, the terminal, when detecting the radio signal of the accessible non-cellular network during a network connection through the cellular network, may determine whether the service state of the presently processed data service meets the first preset condition and perform network connection based on the radio signal when the service state meets the first preset condition. When the service state does not meet the first preset condition, the service state is monitored, and when detecting that processing of the present data service is completed, network connection is performed based on the radio signal. Therefore, interruption of data service due to handover of the network access mode is avoided, the present data service is ensued to be performed smoothly and further the network experience of the user is improved. In addition, before network connection is performed based on the radio signal, the terminal may also acquire the network state and further determine whether to perform network connection based on the radio signal through the network state, thereby improving reliability of the network connection.

FIG. 2A illustrates a network connection device provided in an embodiment of the disclosure. Referring to FIG. 2A, the device includes a judgment module 201, a determination module 202 and a first connection module 203.

The judgment module 201 is configured to determine whether a radio signal of an accessible non-cellular network is detected during a network connection through a cellular network.

The determination module 202 is configured to determine, when the radio signal is detected, whether a service state of a presently processed data service meets a first preset condition. The first preset condition indicates a condition that does not influence service quality of the data service during a handover of a network access mode.

The first connection module 203 is configured to perform network connection based on the radio signal when the service state meets the first preset condition.

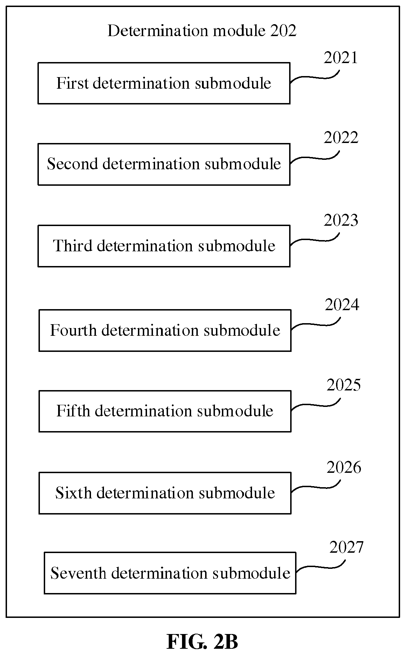

In at least one embodiment, referring to FIG. 2B, the determination module 202 includes at least one of a first determination submodule 2021, a second determination submodule 2022, a third determination submodule 2023, a fourth determination submodule 2024, a fifth determination submodule 2025, a sixth determination submodule 2026, or a seventh determination submodule 2027.

The first determination submodule 2021 is configured to determine, when determining through the service state that no network data is presently transmitted, that the service state meets the first preset condition.

The second determination submodule 2022 is configured to, when determining through the service state that the network data is presently being transmitted, determine, if the network data meets a second preset condition, that the service state meets the first preset condition.

The third determination submodule 2023 is configured to, when determining through the service state that an application program is presently running, determine, if the application program is not a specified application program, that the service state meets the first preset condition.

The fourth determination submodule 2024 is configured to, when determining through the service state that there is no network data to be transmitted presently, determine that the service state meets the first preset condition.

The fifth determination submodule 2025 is configured to, when determining through the service state that there is network data to be transmitted presently, determine, if a transmission time interval between present time and transmission start time of the network data to be transmitted is longer than a preset time interval, that the service state meets the first preset condition.

The sixth determination submodule 2026 is configured to, when determining through the service state that a specified webpage is not presently opened, determine that the service state meets the first preset condition.

The seventh determination submodule 2027 is configured to, when determining through the service state that the specified webpage has presently been opened, determine, if a page state of the specified webpage is not presently a specified state, that the service state meets the first preset condition.

In at least one embodiment, the second determination submodule 2022 is configured to execute at least one of the following manners: in condition that a data type of the network data is not a specified type, determining that the service state meets the first preset condition; in condition that the network data is not data of the specified application program, determining that the service state meets the first preset condition; or, in condition that a transmission rate of the network data is less than a preset rate threshold, determining that the service state meets the first preset condition.

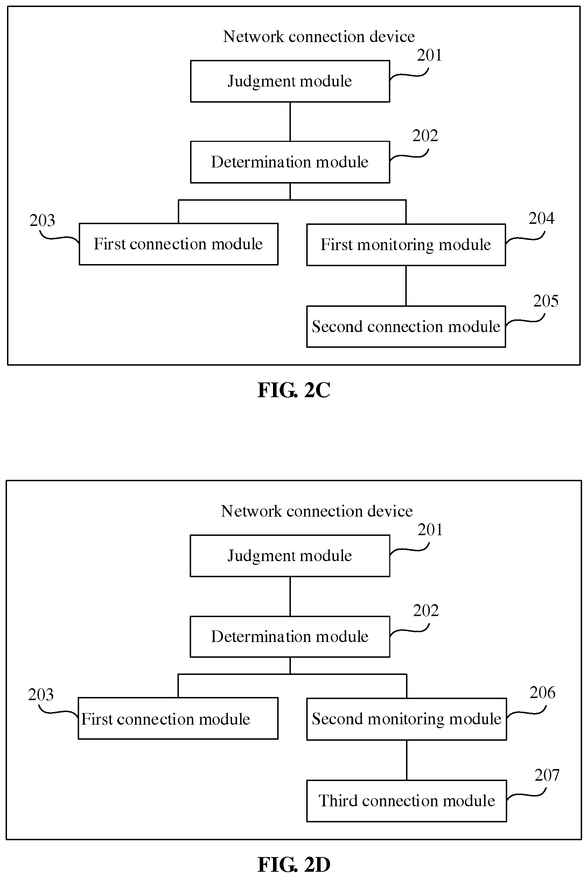

In at least one embodiment, referring to FIG. 2C, the device further includes a first monitoring module 204 and a second connection module 205.

The first monitoring module 204 is configured to, when the service state does not meet the first preset condition and it is determined through the service state that the network data is presently being transmitted or there is network data to be transmitted, monitor a transmission process of the network data.

The second connection module 205 is configured to, when it is monitored that transmission of the network data is ended or when a transmission cycle of the network data is longer than a preset transmission cycle, perform network connection based on the radio signal.

In at least one embodiment, referring to FIG. 2D, the device further includes a second monitoring module 206 and a third connection module 207.

The second monitoring module 206 is configured to, when the service state does not meet the first preset condition and it is determined through the service state that the specified application program is presently running, monitor a running state of the specified application program.

The third connection module 207 is configured to, when it is monitored that the specified application program stops running, perform network connection based on the radio signal.

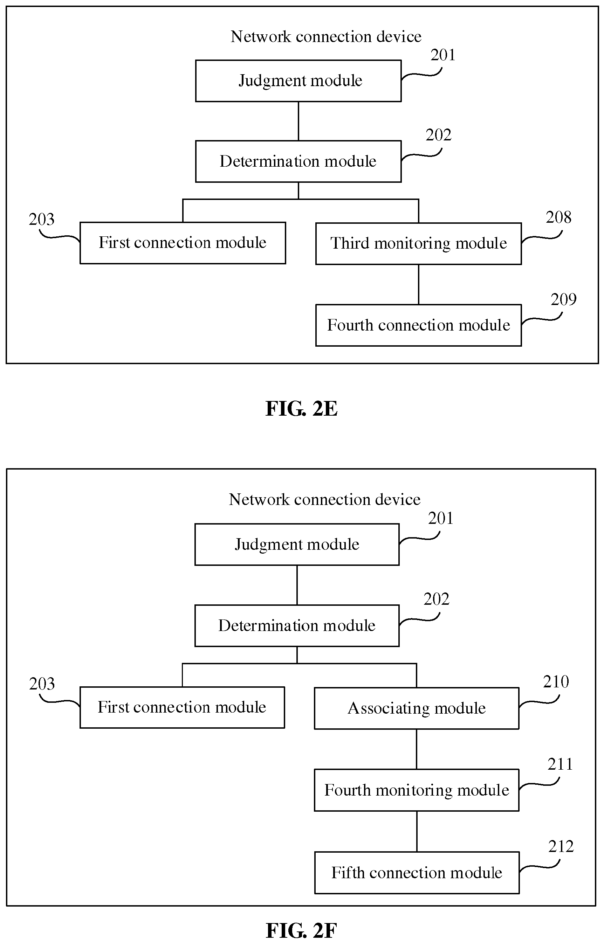

In at least one embodiment, referring to FIG. 2E, the device further includes a third monitoring module 208 and a fourth connection module 209.

The third monitoring module 208 is configured to, when the service state does not meet the first preset condition and it is determined through the service state that the specified webpage has presently been opened and a page state of the specified webpage is presently the specified state, monitor the page state of the specified webpage.

The fourth connection module 209 is configured to, when it is monitored that the page state of the specified webpage is not the specified state, perform network connection based on the radio signal.

In at least one embodiment, referring to FIG. 2F, the device further includes an associating module 210, a fourth monitoring module 211 and a fifth connection module 212.

The associating module 210 is configured to, when the service state does not meet the first preset condition, perform association or attachment to the non-cellular network based on the radio signal.

The fourth monitoring module 211 is configured to continue monitoring the service state.

The fifth connection module 212 is configured to perform network connection when it is monitored that the service state meets the first preset condition.

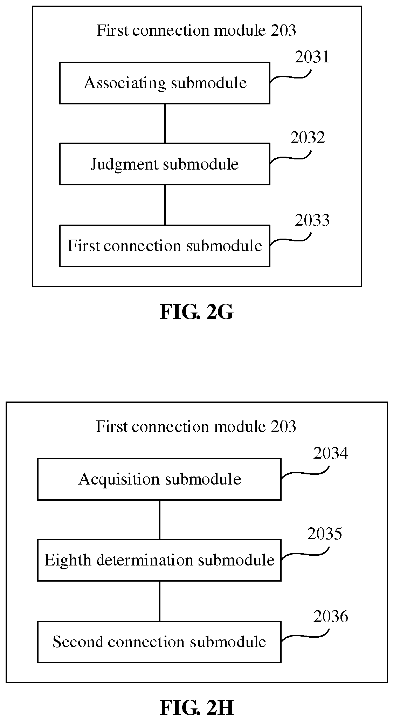

In at least one embodiment, referring to FIG. 2G, the first connection module 203 includes an associating submodule 2031, a judgment submodule 2032 and a first connection submodule 2033.

The associating submodule 2031 is configured to, when the service state meets the first preset condition, perform association or attachment to the non-cellular network based on the radio signal.

The judgment submodule 2032 is configured to, in case of not disconnecting the cellular network, determine whether the data service is capable of being processed through the non-cellular network.

The first connection submodule 2033 is configured to, when the data service is capable of being processed, perform handover of the network access mode from the cellular network to the non-cellular network and perform network connection based on the radio signal.

In at least one embodiment, referring to FIG. 2H, the first connection module 203 includes an acquisition submodule 2034, an eighth determination submodule 2035 and a second connection submodule 2036.

The acquisition submodule 2034 is configured to, when the service state meets the first preset condition, acquire a network state. The network state includes at least one of present signal strength of the cellular network, a present transmission speed of the cellular network or present signal strength of the radio signal.

The eighth determination submodule 2035 is configured to determine whether the network state meets a third preset condition. The third preset condition includes at least one of the cases that the present signal strength of the cellular network is less than a first preset strength threshold, the present transmission speed of the cellular network is less than a preset transmission speed, or the present signal strength of the radio signal is greater than a second preset strength threshold.

The second connection submodule 2036 is configured to, when the network state meets a third preset condition, perform handover of the network access mode from the cellular network to the non-cellular network and perform network connection based on the radio signal.

In the embodiments of the disclosure, the terminal, when detecting the radio signal of the accessible non-cellular network during a network connection through the cellular network, may determine whether the service state of the presently processed data service meets the first preset condition. When the service state meets the first preset condition, the terminal performs network connection based on the radio signal. When the service state does not meet the first preset condition, the service state is monitored, and when it is detected that processing of the present data service is completed, network connection is performed based on the radio signal. Therefore, interruption of data service due to handover of the network access mode is avoided, the present data service is ensued to be performed smoothly and further the network experience of the user is improved. In addition, before network connection is performed based on the radio signal, the terminal may also acquire the network state and further determine whether to perform network connection based on the radio signal through the network state, thereby improving reliability of the network connection.

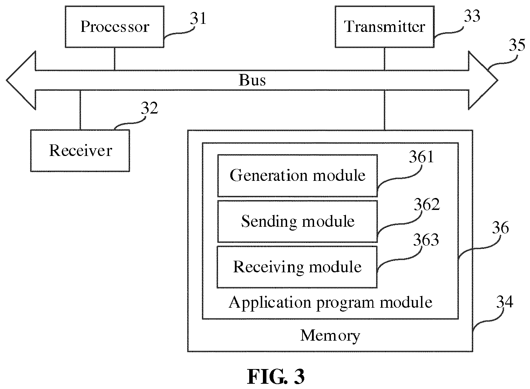

FIG. 3 is a schematic structure diagram of a terminal according to an embodiment of the disclosure. The terminal includes a processor 31, a receiver 32, a transmitter 33, a memory 34 and a bus 35.

The processor 31 includes one or multiple processing cores. The processor 31 runs software programs and modules to execute various functional applications and information processing.

The receiver 32 and the transmitter 33 may be implemented into a communication component. The communication component may be a communication chip. The communication chip may include a receiving module, a transmission module, a modem module and the like, and is configured to modulate and/or demodulate information and receive or send the information through a radio signal.

The memory 34 is connected with the processor 31 through the bus 35.

The memory 34 may be configured to store the software programs and the modules.

The memory 34 may store an application program module 36 for at least one function. The application program module 36 may include a generation module 361, a sending module 362 and a receiving module 363.

The processor 31 is configured to execute the generation module 361 to realize a function related to a generation operation in each method embodiment. The processor 31 is configured to execute the sending module 362 to realize a function related to a sending operation in each method embodiment. The processor 31 is configured to execute the receiving module 363 to realize a function related to a receiving operation in each method embodiment.

The memory 34 may be implemented by a volatile or nonvolatile storage device of any type or a combination thereof, for example, a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk or an optical disk.

Those skilled in the art may realize that, in the one or more abovementioned examples, the functions described in the embodiments of the disclosure may be implemented through hardware, software, firmware or any combination thereof. When being implemented through the software, these functions may be stored in a computer-readable medium or transmitted as one or more instructions or codes in the computer-readable medium. The computer-readable medium includes a computer storage medium and a communication medium. The communication medium includes any medium for transmitting a computer program from one place to another place. The storage medium may be any available medium accessible for a universal or dedicated computer.

## Claims

1. A network connection method, executed by a terminal, and comprising:
determining (101) whether a radio signal of an accessible non-cellular network is detected during a network connection through a cellular network;
determining (102), when the radio signal is detected, whether a service state of a presently processed data service meets a first preset condition, the first preset condition being a condition that does not influence service quality of the data service during a handover of a network access mode; and
performing (103) a network connection through the non-cellular network based on the radio signal when the service state meets the first preset condition,
**characterized in that**, the performing (103) a network connection through the non-cellular network based on the radio signal when the service state meets the first preset condition comprises:
when the service state meets the first preset condition, performing association or attachment to the non-cellular network based on the radio signal; in case of keeping connection of the cellular network, determining whether the data service is capable of being processed through the non-cellular network; and when the data service is capable of being processed, performing handover of the network access mode from the cellular network to the non-cellular network, and performing the network connection through the non-cellular network based on the radio signal; or
when the service state meets the first preset condition, acquiring a network state, the network state comprising at least one of present signal strength of the cellular network, a present transmission speed of the cellular network or present signal strength of the radio signal; determining whether the network state meets a third preset condition, the third preset condition comprising at least one of the following: the present signal strength of the cellular network being less than a first preset strength threshold, the present transmission speed of the cellular network being less than a preset transmission speed, or the present signal strength of the radio signal being more than a second preset strength threshold; and when the network state meets the third preset condition, performing handover of the network access mode from the cellular network to the non-cellular network, and performing the network connection through the non-cellular network based on the radio signal.

2. The method of claim 1, wherein determining (102) whether the service state of the presently processed data service meets the first preset condition comprises at least one of the following:
when determining through the service state that no network data is presently transmitted, determining that the service state meets the first preset condition;
when determining through the service state that the network data is presently being transmitted, determining, if the network data meets a second preset condition, that the service state meets the first preset condition;
when determining through the service state that an application program is presently running, determining, if the application program is not a specified application program, that the service state meets the first preset condition;
when determining through the service state that there is no network data to be transmitted presently, determining that the service state meets the first preset condition;
when determining through the service state that there is the network data to be transmitted presently, determining, if a transmission time interval between present time and transmission start time of the network data to be transmitted is longer than a preset time interval, that the service state meets the first preset condition;
when determining through the service state that a specified webpage is not presently opened, determining that the service state meets the first preset condition; or
when determining through the service state that the specified webpage has presently been opened, determining, if a page state of the specified webpage is not presently a specified state, that the service state meets the first preset condition.

3. The method of claim 1 or 2, wherein after determining whether the service state of the presently processed data service meets the first preset condition, further comprising:
when the service state does not meet the first preset condition and it is determined through the service state that the network data is presently being transmitted or there is the network data to be transmitted, monitoring a transmission process of the network data; and
when it is monitored that transmission of the network data is ended or a transmission cycle of the network data is longer than a preset transmission cycle, performing the network connection through the non-cellular network based on the radio signal.

4. The method of claim 1 or 2, wherein after determining (102) whether the service state of the presently processed data service meets the first preset condition, further comprising:
when the service state does not meet the first preset condition and it is determined through the service state that the specified application program is presently running, monitoring a running state of the specified application program; and
performing the network connection through the non-cellular network based on the radio signal when it is monitored that the specified application program stops running.

5. The method of claim 1 or 2, wherein after determining (102) whether the service state of the presently processed data service meets the first preset condition, further comprising:
when the service state does not meet the first preset condition and it is determined through the service state that the specified webpage has presently been opened and a page state of the specified webpage is presently the specified state, monitoring the page state of the specified webpage; and
performing the network connection through the non-cellular network based on the radio signal when it is monitored that the page state of the specified webpage is not the specified state.

6. A network connection device, comprising:
a judgment module (201), configured to determine whether a radio signal of an accessible non-cellular network is detected during a network connection through a cellular network;
a determination module (202), configured to, determine, when the radio signal is detected, whether a service state of a presently processed data service meets a first preset condition, the first preset condition being a condition that does not influence service quality of the data service during a handover of a network access mode; and
a first connection module (203), configured to perform the network connection through the non-cellular network based on the radio signal when the service state meets the first preset condition,
**characterized in that**,
the network connection device further comprises:
an associating module (210), configured to, when the service state does not meet the first preset condition, perform association or attachment to the non-cellular network based on the radio signal;
a fourth monitoring module (211), configured to continue monitoring the service state; and
a fifth connection module (212), configured to perform the network connection through the non-cellular network when it is monitored that the service state meets the first preset condition, or
wherein the network connection device further comprises
an acquisition submodule (2034), configured to, when the service state meets the first preset condition, acquire a network state, the network state comprising at least one of present signal strength of the cellular network, a present transmission speed of the cellular network or present signal strength of the radio signal;
an eighth determination submodule (2035), configured to determine whether the network state meets a third preset condition, the third preset condition comprising at least one of the following: the present signal strength of the cellular network being less than a first preset strength threshold, the present transmission speed of the cellular network being less than a preset transmission speed, or the present signal strength of the radio signal being more than a second preset strength threshold; and
a second connection submodule (2036), configured to, when the network state meets the third preset condition, perform handover of the network access mode from the cellular network to the non-cellular network and perform the network connection through the non-cellular network based on the radio signal.

7. The device of claim 6, wherein the determination module (202) comprises at least one of the following submodules:
a first determination submodule (2021), configured to, when determining through the service state that no network data is presently transmitted, determine that the service state meets the first preset condition;
a second determination submodule (2022), configured to, when determining through the service state that the network data is presently being transmitted, determine, if the network data meets a second preset condition, that the service state meets the first preset condition;
a third determination submodule (2023), configured to, when determining through the service state that an application program is presently running, determine, if the application program is not a specified application program, that the service state meets the first preset condition;
a fourth determination submodule (2024), configured to, when determining through the service state that there is no network data to be transmitted presently, determine that the service state meets the first preset condition;
a fifth determination submodule (2025), configured to, when determining through the service state that there is the network data to be transmitted presently, determine, if a transmission time interval between present time and starting time of transmission of the network data to be transmitted is longer than a preset time interval, that the service state meets the first preset condition;
a sixth determination submodule (2026), configured to, when determining through the service state that a specified webpage is not presently opened, determine that the service state meets the first preset condition; or
a seventh determination submodule (2027), configured to, when determining through the service state that the specified webpage has presently been opened, determine, if a page state of the specified webpage is not presently a specified state, that the service state meets the first preset condition.

8. The device of claim 6 or 7, further comprising:
a first monitoring module (204), configured to, when the service state does not meet the first preset condition and it is determined through the service state that the network data is presently being transmitted or there is the network data to be transmitted, monitor a transmission process of the network data; and
a second connection module (205), configured to, when it is monitored that transmission of the network data is ended or a transmission cycle of the network data is longer than a preset transmission cycle, perform the network connection through the non-cellular network based on the radio signal.

9. The device of claim 6 or 7, further comprising:
a second monitoring module (206), configured to, when the service state does not meet the first preset condition and it is determined through the service state that the specified application program is presently running, monitor a running state of the specified application program; and
a third connection module (207), configured to perform the network connection through the non-cellular network based on the radio signal when it is monitored that the specified application program stops running.

10. The device of claim 6 or 7, further comprising:
a third monitoring module (208), configured to, when the service state does not meet the first preset condition and it is determined through the service state that the specified webpage has presently been opened and a page state of the specified webpage is presently the specified state, monitor the page state of the specified webpage; and
a fourth connection module (209), configured to perform the network connection through the non-cellular network based on the radio signal when it is monitored that the page state of the specified webpage is not the specified state.

11. The device of claim 6, wherein the first connection module (203) comprises:
an associating submodule (2031), configured to, when the service state meets the first preset condition, perform association or attachment to the non-cellular network based on the radio signal;
a judgment submodule (2032), configured to, in case of keeping connection of the cellular network, determine whether the data service is capable of being processed through the non-cellular network; and
a first connection submodule (2033), configured to, when the data service is capable of being processed, perform handover of the network access mode from the cellular network to the non-cellular network and perform the network connection through the non-cellular network based on the radio signal.

## Patentansprüche

1. Netzwerkverbindungsverfahren, ausgeführt von einem Endgerät und Folgendes umfassend:
Bestimmen (101), ob ein Funksignal eines zugänglichen nicht-zellulären Netzwerks während einer Netzwerkverbindung über ein zelluläres Netzwerk erkannt wird;
Bestimmen (102), wenn das Funksignal erkannt wird, ob ein Dienstzustand eines gegenwärtig verarbeiteten Datendienstes eine erste voreingestellte Bedingung erfüllt, wobei die erste voreingestellte Bedingung eine Bedingung ist, die die Dienstgüte des Datendienstes während einer Übergabe (Handover) eines Netzwerkzugangsmodus nicht beeinflusst; und
Durchführen (103) einer Netzwerkverbindung über das nicht-zelluläre Netzwerk basierend auf dem Funksignal, wenn der Dienstzustand die erste voreingestellte Bedingung erfüllt,
**dadurch gekennzeichnet, dass** das Durchführen (103) einer Netzwerkverbindung über das nicht-zelluläre Netzwerk basierend auf dem Funksignal, wenn der Dienstzustand die erste voreingestellte Bedingung erfüllt, Folgendes umfasst:
wenn der Dienstzustand die erste voreingestellte Bedingung erfüllt, Durchführen einer Assoziation oder Zuordnung zu dem nicht-zellulären Netzwerk basierend auf dem Funksignal; im Fall des Aufrechterhaltens der Verbindung des zellulären Netzwerks Bestimmen, ob der Datendienst zur Verarbeitung durch das nicht-zelluläre Netzwerk fähig ist; und wenn der Datendienst zur Verarbeitung fähig ist, Durchführen einer Übergabe des Netzwerkzugangsmodus von dem zellulären Netzwerk an das nicht-zelluläre Netzwerk und Durchführen der Netzwerkverbindung über das nicht-zelluläre Netzwerk basierend auf dem Funksignal; oder
wenn der Dienstzustand die erste voreingestellte Bedingung erfüllt, Erfassen eines Netzwerkzustands, wobei der Netzwerkzustand mindestens eines von einer gegenwärtigen Signalstärke des zellulären Netzwerks, einer gegenwärtigen Übertragungsgeschwindigkeit des zellulären Netzwerks oder einer gegenwärtigen Signalstärke des Funksignals umfasst, Bestimmen, ob der Netzwerkzustand eine dritte voreingestellte Bedingung erfüllt, wobei die dritte voreingestellte Bedingung mindestens eines der Folgenden umfasst: dass die gegenwärtige Signalstärke des zellulären Netzwerks geringer als ein erster voreingestellter Stärkeschwellenwert ist, dass die gegenwärtige Übertragungsgeschwindigkeit des zellulären Netzwerks geringer als eine voreingestellte Übertragungsgeschwindigkeit ist oder dass die gegenwärtige Signalstärke des Funksignals höher als ein zweiter voreingestellter Stärkeschwellenwert ist, und wenn der Netzwerkzustand die dritte voreingestellte Bedingung erfüllt, Durchführen einer Übergabe des Netzwerkzugangsmodus von dem zellulären Netzwerk an das nicht-zelluläre Netzwerk und Durchführen der Netzwerkverbindung über das nicht-zelluläre Netzwerk basierend auf dem Funksignal.

2. Verfahren nach Anspruch 1, wobei das Bestimmen (102), ob der Dienstzustand des gegenwärtig verarbeiteten Datendienstes die erste voreingestellte Bedingung erfüllt, mindestens eines der Folgenden umfasst:
wenn über den Dienstzustand bestimmt wird, dass gegenwärtig keine Netzwerkdaten übertragen werden, Bestimmen, dass der Dienstzustand die erste voreingestellte Bedingung erfüllt;
wenn über den Dienstzustand bestimmt wird, dass die Netzwerkdaten gegenwärtig übertragen werden, Bestimmen, dass der Dienstzustand die erste voreingestellte Bedingung erfüllt, wenn die Netzwerkdaten eine zweite voreingestellte Bedingung erfüllen;
wenn über den Dienstzustand bestimmt wird, dass gegenwärtig ein Anwendungsprogramm läuft, Bestimmen, dass der Dienstzustand die erste voreingestellte Bedingung erfüllt, wenn das Anwendungsprogramm ein spezifiziertes Anwendungsprogramm ist;
wenn über den Dienstzustand bestimmt wird, dass es keine Netzwerkdaten gibt, die gegenwärtig zu übertragen sind, Bestimmen, dass der Dienstzustand die erste voreingestellte Bedingung erfüllt;
wenn über den Dienstzustand bestimmt wird, dass es die Netzwerkdaten gibt, die gegenwärtig zu übertragen sind, Bestimmen, dass der Dienstzustand die erste voreingestellte Bedingung erfüllt, wenn ein Übertragungszeitintervall zwischen gegenwärtiger Zeit und Übertragungsstartzeit der zu übertragenden Netzwerkdaten größer als ein voreingestelltes Zeitintervall ist;
wenn über den Dienstzustand bestimmt wird, dass gegenwärtig eine spezifizierte Webseite nicht geöffnet ist, Bestimmen, dass der Dienstzustand die erste voreingestellte Bedingung erfüllt; oder
wenn über den Dienstzustand bestimmt wird, dass die spezifizierte Webseite gegenwärtig geöffnet ist, Bestimmen, dass der Dienstzustand die erste voreingestellte Bedingung erfüllt, wenn ein Seitenzustand der spezifizierten Webseite gegenwärtig kein spezifizierter Zustand ist.

3. Verfahren nach Anspruch 1 oder 2, wobei nach dem Bestimmen, ob der Dienstzustand des gegenwärtig verarbeiteten Datendienstes die erste voreingestellte Bedingung erfüllt, ferner umfassend:
wenn der Dienstzustand die erste voreingestellte Bedingung nicht erfüllt und über den Dienstzustand bestimmt wird, dass die Netzwerkdaten gegenwärtig übertragen werden und es die Netzwerkdaten gibt, die zu übertragen sind, Überwachen eines Übertragungsprozesse der Netzwerkdaten; und
wenn die Überwachung ergibt, dass die Übertragung der Netzwerkdaten beendet ist oder ein Übertragungszyklus der Netzwerkdaten länger als ein voreingestellter Übertragungszyklus ist, Durchführen der Netzwerkverbindung über das nicht-zelluläre Netzwerk basierend auf dem Funksignal.

4. Verfahren nach Anspruch 1 oder 2, wobei nach dem Bestimmen (102), ob der Dienstzustand des gegenwärtig verarbeiteten Datendienstes die erste voreingestellte Bedingung erfüllt, ferner Folgendes umfassend:
wenn der Dienstzustand die erste voreingestellte Bedingung nicht erfüllt und über den Dienstzustand bestimmt wird, dass gegenwärtig das spezifizierte Anwendungsprogramm läuft, Überwachen eines Laufzustandes des spezifizierten Anwendungsprogramms; und
Durchführen der Netzwerkverbindung über das nicht-zelluläre Netzwerk basierend auf dem Funksignal, wenn die Überwachung ergibt, dass das spezifizierte Anwendungsprogramm aufhört zu laufen.

5. Verfahren nach Anspruch 1 oder 2, wobei nach dem Bestimmen (102), ob der Dienstzustand des gegenwärtig verarbeiteten Datendienstes die erste voreingestellte Bedingung erfüllt, ferner Folgendes umfassend:
wenn der Dienstzustand die erste voreingestellte Bedingung nicht erfüllt und über den Dienstzustand bestimmt wird, dass gegenwärtig die spezifizierte Webseite geöffnet ist und ein Seitenzustand der spezifizierten Webseite gegenwärtig der spezifizierte Zustand ist, Überwachen des Seitenzustandes der spezifizierten Webseite; und
Durchführen der Netzwerkverbindung über das nicht-zelluläre Netzwerk basierend auf dem Funksignal, wenn die Überwachung ergibt, dass der Seitenzustand der spezifizierten Webseite nicht der spezifizierte Zustand ist.

6. Netzwerkverbindungsvorrichtung, umfassend:
ein Bewertungsmodul (201), das dazu konfiguriert ist zu bestimmen, ob ein Funksignal eines zugänglichen nicht-zellulären Netzwerks während einer Netzwerkverbindung über ein zelluläres Netzwerk erkannt wird;
ein Bestimmungsmodul (202), das dazu konfiguriert ist zu bestimmen, wenn das Funksignal erkannt wird, ob ein Dienstzustand eines gegenwärtig verarbeiteten Datendienstes eine erste voreingestellte Bedingung erfüllt, wobei die erste voreingestellte Bedingung eine Bedingung ist, die die Dienstgüte des Datendienstes während einer Übergabe (Handover) eines Netzwerkzugangsmodus nicht beeinflusst; und
eine erstes Verbindungsmodul (203), das dazu konfiguriert ist, die Netzwerkverbindung über das nicht-zelluläre Netzwerk basierend auf dem Funksignal durchzuführen, wenn der Dienstzustand die erste voreingestellte Bedingung erfüllt,
**dadurch gekennzeichnet, dass**
die Netzwerkverbindungsvorrichtung ferner Folgendes umfasst:
ein Assoziierungsmodul (210), das dazu konfiguriert ist, eine Assoziation oder Zuordnung zu dem nicht-zellulären Netzwerk basierend auf dem Funksignal durchzuführen, wenn der Dienstzustand die erste voreingestellte Bedingung nicht erfüllt;
ein viertes Überwachungsmodul (211), das dazu konfiguriert ist, die Überwachung des Dienstzustandes fortzusetzen; und
ein fünftes Verbindungsmodul (212), das dazu konfiguriert ist, die Netzwerkverbindung über das nicht-zelluläre Netzwerk durchzuführen, wenn die Überwachung ergibt, dass der Dienstzustand die erste voreingestellte Bedingung erfüllt, oder
wobei die Netzwerkverbindungsvorrichtung ferner Folgendes umfasst:
ein Erfassungsteilmodul (2034), das dazu konfiguriert ist, einen Netzwerkzustand zu erfassen, wenn der Dienstzustand die erste voreingestellte Bedingung erfüllt, wobei der Netzwerkzustand mindestens eines von einer gegenwärtigen Signalstärke des zellulären Netzwerks, einer gegenwärtigen Übertragungsgeschwindigkeit des zellulären Netzwerks oder einer gegenwärtigen Signalstärke des Funksignals umfasst;
ein achtes Bestimmungsteilmodul (2035), das dazu konfiguriert ist zu bestimmen, ob der Netzwerkzustand eine dritte voreingestellte Bedingung erfüllt, wobei die dritte voreingestellte Bedingung mindestens eines der Folgenden umfasst: dass die gegenwärtige Signalstärke des zellulären Netzwerks geringer als ein erster voreingestellter Stärkeschwellenwert ist, dass die gegenwärtige Übertragungsgeschwindigkeit des zellulären Netzwerks geringer als eine voreingestellte Übertragungsgeschwindigkeit ist oder dass die gegenwärtige Signalstärke des Funksignals höher als ein zweiter voreingestellter Stärkeschwellenwert ist; und
ein zweites Verbindungsteilmodul (2036), das dazu konfiguriert ist, wenn der Netzwerkzustand die dritte voreingestellte Bedingung erfüllt, eine Übergabe des Netzwerkzugangsmodus von dem zellulären Netzwerk an das nicht-zelluläre Netzwerk durchzuführen und die Netzwerkverbindung über das nicht-zelluläre Netzwerk basierend auf dem Funksignal durchzuführen.

7. Vorrichtung nach Anspruch 6, wobei das Bestimmungsmodul (202) mindestens eines der folgenden Teilmodule umfasst:
ein erstes Bestimmungsteilmodul (2021), das dazu konfiguriert ist zu bestimmen, dass der Dienstzustand die erste voreingestellte Bedingung erfüllt, wenn über den Dienstzustand bestimmt wird, dass gegenwärtig keine Netzwerkdaten übertragen werden;
ein zweites Bestimmungsteilmodul (2022), das dazu konfiguriert ist, wenn über den Dienstzustand bestimmt wird, dass die Netzwerkdaten gegenwärtig übertragen werden, zu bestimmen, dass der Dienstzustand die erste voreingestellte Bedingung erfüllt, wenn die Netzwerkdaten eine zweite voreingestellte Bedingung erfüllen;
ein drittes Bestimmungsteilmodul (2023), das dazu konfiguriert ist, wenn über den Dienstzustand bestimmt wird, dass gegenwärtig ein Anwendungsprogramm läuft, zu bestimmen, dass der Dienstzustand die erste voreingestellte Bedingung erfüllt, wenn das Anwendungsprogramm ein spezifiziertes Anwendungsprogramm ist;
ein viertes Bestimmungsteilmodul (2024), das dazu konfiguriert ist zu bestimmen, dass der Dienstzustand die erste voreingestellte Bedingung erfüllt, wenn über den Dienstzustand bestimmt wird, dass es keine Netzwerkdaten gibt, die gegenwärtig zu übertragen sind;
ein fünftes Bestimmungsteilmodul (2025), das dazu konfiguriert ist, wenn über den Dienstzustand bestimmt wird, dass es die Netzwerkdaten gibt, die gegenwärtig zu übertragen sind, zu bestimmen, dass der Dienstzustand die erste voreingestellte Bedingung erfüllt, wenn ein Übertragungszeitintervall zwischen gegenwärtiger Zeit und Übertragungsstartzeit der zu übertragenden Netzwerkdaten größer als ein voreingestelltes Zeitintervall ist;
ein sechstes Bestimmungsteilmodul (2026), das dazu konfiguriert ist zu bestimmen, dass der Dienstzustand die erste voreingestellte Bedingung erfüllt, wenn über den Dienstzustand bestimmt wird, dass gegenwärtig keine spezifizierte Webseite geöffnet ist; oder
ein siebentes Bestimmungsteilmodul (2027), das dazu konfiguriert ist, wenn über den Dienstzustand bestimmt wird, dass die spezifizierte Webseite gegenwärtig geöffnet ist, zu bestimmen, dass der Dienstzustand die erste voreingestellte Bedingung erfüllt, wenn ein Seitenzustand der spezifizierten Webseite gegenwärtig kein spezifizierter Zustand ist.

8. Vorrichtung nach Anspruch 6 oder 7, ferner umfassend:
ein erstes Überwachungsmodul (204), das dazu konfiguriert ist, einen Übertragungsprozess der Netzwerkdaten zu überwachen, wenn der Dienstzustand die erste voreingestellte Bedingung nicht erfüllt und über den Dienstzustand bestimmt wird, dass die Netzwerkdaten gegenwärtig übertragen werden oder es die Netzwerkdaten gibt, die zu übertragen sind; und
ein zweites Verbindungsmodul (205), das dazu konfiguriert ist, die Netzwerkverbindung über das nicht-zelluläre Netzwerk basierend auf dem Funksignal durchzuführen, wenn die Überwachung ergibt, dass die Übertragung der Netzwerkdaten beendet ist oder ein Übertragungszyklus der Netzwerkdaten länger als ein voreingestellter Übertragungszyklus ist.

9. Vorrichtung nach Anspruch 6 oder 7, ferner umfassend:
ein zweites Überwachungsmodul (206), das dazu konfiguriert ist, einen Laufzustand des spezifizierten Anwendungsprogramms zu überwachen, wenn der Dienstzustand die erste voreingestellte Bedingung nicht erfüllt und über den Dienstzustand bestimmt wird, dass gegenwärtig das spezifizierte Anwendungsprogramm läuft; und
ein drittes Verbindungsmodul (207), das dazu konfiguriert ist, die Netzwerkverbindung über das nicht-zelluläre Netzwerk basierend auf dem Funksignal durchzuführen, wenn die Überwachung ergibt, dass das spezifizierte Anwendungsprogramm aufhört zu laufen.

10. Vorrichtung nach Anspruch 6 oder 7, ferner umfassend:
ein drittes Überwachungsmodul (208), das dazu konfiguriert ist, den Seitenzustand der spezifizierten Webseite zu überwachen, wenn der Dienstzustand die erste voreingestellte Bedingung nicht erfüllt und über den Dienstzustand bestimmt wird, dass gegenwärtig die spezifizierte Webseite geöffnet ist und ein Seitenzustand der spezifizierten Webseite gegenwärtig der spezifizierte Zustand ist; und
ein viertes Verbindungsmodul (209), das dazu konfiguriert ist, die Netzwerkverbindung über das nicht-zelluläre Netzwerk basierend auf dem Funksignal durchzuführen, wenn die Überwachung ergibt, dass der Seitenzustand der spezifizierten Webseite nicht der spezifizierte Zustand ist.

11. Vorrichtung nach Anspruch 6, wobei das erste Verbindungsmodul (203) Folgendes umfasst:
ein Assoziierungsteilmodul (2031), das dazu konfiguriert ist, eine Assoziation oder Zuordnung zu dem nicht-zellulären Netzwerk basierend auf dem Funksignal durchzuführen, wenn der Dienstzustand die erste voreingestellte Bedingung erfüllt;
ein Bewertungsteilmodul (2032), das dazu konfiguriert ist, im Fall des Aufrechterhaltens der Verbindung des zellulären Netzwerks zu bestimmen, ob der Datendienst zur Verarbeitung durch das nicht-zelluläre Netzwerk fähig ist; und
ein erstes Verbindungsteilmodul (2033), das dazu konfiguriert ist, eine Übergabe des Netzwerkzugangsmodus von dem zellulären Netzwerk an das nicht-zelluläre Netzwerk durchzuführen und die Netzwerkverbindung durch das nicht-zelluläre Netzwerk basierend auf dem Funksignal durchzuführen.

## Revendications

1. Procédé de connexion de réseau, exécuté par un terminal et comprenant les étapes consistant à :
déterminer (101) si un signal radio d'un réseau non cellulaire accessible est détecté pendant une connexion de réseau par l'intermédiaire d'un réseau cellulaire ;
déterminer (102), quand le signal radio est détecté, si un état de service d'un service de données actuellement traité satisfait à une première condition prédéfinie, la première condition prédéfinie étant une condition qui n'influence pas une qualité de service du service de données pendant un transfert d'un mode d'accès de réseau ; et
réaliser (103) une connexion de réseau par l'intermédiaire du réseau non cellulaire sur la base du signal radio quand l'état de service satisfait à la première condition prédéfinie,
**caractérisé en ce que** la réalisation (103) d'une connexion de réseau par l'intermédiaire du réseau non cellulaire sur la base du signal radio quand l'état de service satisfait à la première condition prédéfinie comprend les étapes consistant à :
quand l'état de service satisfait à la première condition prédéfinie, réaliser une association avec le réseau non cellulaire ou une connexion au réseau non cellulaire sur la base du signal radio ;
en cas de conservation de la connexion du réseau cellulaire, déterminer si le service de données est capable d'être traité par l'intermédiaire du réseau non cellulaire ; et quand le service de données est capable d'être traité, réaliser un transfert du mode d'accès de réseau du réseau cellulaire au réseau non cellulaire et réaliser la connexion de réseau par l'intermédiaire du réseau non cellulaire sur la base du signal radio ; ou
quand l'état de service satisfait à la première condition prédéfinie, acquérir un état de réseau, l'état de réseau comprenant au moins une information parmi une puissance de signal actuelle du réseau cellulaire, une vitesse de transmission actuelle du réseau cellulaire et une puissance de signal actuelle du signal radio ; déterminer si l'état de réseau satisfait à une troisième condition prédéfinie, la troisième condition prédéfinie comprenant au moins une des conditions suivantes : la puissance de signal actuelle du réseau cellulaire est inférieure à un premier seuil de puissance prédéfini, la vitesse de transmission actuelle du réseau cellulaire est inférieure à une vitesse de transmission prédéfinie et la puissance de signal actuelle du signal radio est supérieure à un second seuil de puissance prédéfini ; et quand l'état de réseau satisfait à la troisième condition prédéfinie, réaliser un transfert du mode d'accès de réseau du réseau cellulaire au réseau non cellulaire et réaliser la connexion de réseau par l'intermédiaire du réseau non cellulaire sur la base du signal radio.

2. Procédé selon la revendication 1, dans lequel le fait de déterminer (102) si l'état de service du service de données actuellement traité satisfait à la première condition prédéfinie comprend au moins une des étapes suivantes consistant à :
quand il est déterminé, par l'intermédiaire de l'état de service, qu'aucune donnée de réseau n'est actuellement transmise, déterminer que l'état de service satisfait à la première condition prédéfinie ;
quand il est déterminé, par l'intermédiaire de l'état de service, que les données de réseau sont actuellement en cours de transmission, déterminer, si les données de réseau satisfont à une deuxième condition prédéfinie, que l'état de service satisfait à la première condition prédéfinie ;
quand il est déterminé, par l'intermédiaire de l'état de service, qu'un programme d'application est actuellement en cours d'exécution, déterminer, si le programme d'application n'est pas un programme d'application spécifié, que l'état de service satisfait à la première condition prédéfinie ;
quand il est déterminé, par l'intermédiaire de l'état de service, qu'il n'y a aucune donnée de réseau à transmettre actuellement, déterminer que l'état de service satisfait à la première condition prédéfinie ;
quand il est déterminé, par l'intermédiaire de l'état de service, qu'il y a les données de réseau à transmettre actuellement, déterminer, si un intervalle de temps de transmission entre un temps actuel et un temps de début de transmission des données de réseau à transmettre est plus long qu'un intervalle de temps prédéfini, que l'état de service satisfait à la première condition prédéfinie ;
quand il est déterminé, par l'intermédiaire de l'état de service, qu'une page Web spécifiée n'est actuellement pas ouverte, déterminer que l'état de service satisfait à la première condition prédéfinie ; ou
quand il est déterminé, par l'intermédiaire de l'état de service, que la page Web spécifiée a été actuellement ouverte, déterminer, si un état de page de la page Web spécifiée n'est pas actuellement un état spécifié, que l'état de service satisfait à la première condition prédéfinie.

3. Procédé selon la revendication 1 ou 2, le procédé comprenant en outre, après qu'il a été déterminé si l'état de service du service de données actuellement traité satisfait à la première condition prédéfinie, les étapes consistant à :
quand l'état de service ne satisfait pas à la première condition prédéfinie et quand il est déterminé, par l'intermédiaire de l'état de service, que les données de réseau sont actuellement en cours de transmission ou qu'il y a les données de réseau à transmettre, surveiller un processus de transmission des données de réseau ; et
quand il est surveillé qu'une transmission des données de réseau est finie ou qu'un cycle de transmission des données de réseau est plus long qu'un cycle de transmission prédéfini, réaliser la connexion de réseau par l'intermédiaire du réseau non cellulaire sur la base du signal radio.

4. Procédé selon la revendication 1 ou 2, le procédé comprenant en outre, après qu'il a été déterminé (102) si l'état de service du service de données actuellement traité satisfait à la première condition prédéfinie, les étapes consistant à :
quand l'état de service ne satisfait pas à la première condition prédéfinie et quand il est déterminé, par l'intermédiaire de l'état de service, que le programme d'application spécifié est actuellement en cours d'exécution, surveiller un état d'exécution du programme d'application spécifié ; et
réaliser la connexion de réseau par l'intermédiaire du réseau non cellulaire sur la base du signal radio quand il est surveillé que le programme d'application spécifié arrête d'être exécuté.

5. Procédé selon la revendication 1 ou 2, le procédé comprenant en outre, après qu'il a été déterminé (102) si l'état de service du service de données actuellement traité satisfait à la première condition prédéfinie, les étapes consistant à :
quand l'état de service ne satisfait pas à la première condition prédéfinie et quand il est déterminé, par l'intermédiaire de l'état de service, que la page Web spécifiée a été actuellement ouverte et qu'un état de page de la page Web spécifiée est actuellement l'état spécifié, surveiller l'état de page de la page Web spécifiée ; et
réaliser la connexion de réseau par l'intermédiaire du réseau non cellulaire sur la base du signal radio quand il est surveillé que l'état de page de la page Web spécifiée n'est pas l'état spécifié.

6. Dispositif de connexion de réseau, comprenant :
un module de jugement (201), configuré pour déterminer si un signal radio d'un réseau non cellulaire accessible est détecté pendant une connexion de réseau par l'intermédiaire d'un réseau cellulaire ;
un module de détermination (202), configuré pour déterminer, quand le signal radio est détecté, si un état de service d'un service de données actuellement traité satisfait à une première condition prédéfinie, la première condition prédéfinie étant une condition qui n'influence pas une qualité de service du service de données pendant un transfert d'un mode d'accès de réseau ; et
un premier module de connexion (203), configuré pour réaliser la connexion de réseau par l'intermédiaire du réseau non cellulaire sur la base du signal radio quand l'état de service satisfait à la première condition prédéfinie,
**caractérisé en ce que** :
le dispositif de connexion de réseau comprend en outre : un module d'association (210), configuré pour, quand l'état de service ne satisfait pas à la première condition prédéfinie, réaliser une association avec le réseau non cellulaire ou une connexion au réseau non cellulaire sur la base du signal radio ;
un quatrième module de surveillance (211), configuré pour continuer la surveillance de l'état de service ; et
un cinquième module de connexion (212), configuré pour réaliser la connexion de réseau par l'intermédiaire du réseau non cellulaire quand il est surveillé que l'état de service satisfait à la première condition prédéfinie, ou
le dispositif de connexion de réseau comprenant en outre :
un sous-module d'acquisition (2034), configuré pour, quand l'état de service satisfait à la première condition prédéfinie, acquérir un état de réseau, l'état de réseau comprenant au moins une information parmi une puissance de signal actuelle du réseau cellulaire, une vitesse de transmission actuelle du réseau cellulaire et une puissance de signal actuelle du signal radio ;
un huitième sous-module de détermination (2035), configuré pour déterminer si l'état de réseau satisfait à une troisième condition prédéfinie, la troisième condition prédéfinie comprenant au moins une des conditions suivantes : la puissance de signal actuelle du réseau cellulaire est inférieure à un premier seuil de puissance prédéfini, la vitesse de transmission actuelle du réseau cellulaire est inférieure à une vitesse de transmission prédéfinie et la puissance de signal actuelle du signal radio est supérieure à un second seuil de puissance prédéfini ; et
un second sous-module de connexion (2036), configuré pour, quand l'état de réseau satisfait à la troisième condition prédéfinie, réaliser un transfert du mode d'accès de réseau du réseau cellulaire au réseau non cellulaire et réaliser la connexion de réseau par l'intermédiaire du réseau non cellulaire sur la base du signal radio.

7. Dispositif selon la revendication 6, dans lequel le module de détermination (202) comprend au moins un des sous-modules suivants :
un premier sous-module de détermination (2021), configuré pour, quand il est déterminé, par l'intermédiaire de l'état de service, qu'aucune donnée de réseau n'est actuellement transmise, déterminer que l'état de service satisfait à la première condition prédéfinie ;
un deuxième sous-module de détermination (2022), configuré pour, quand il est déterminé, par l'intermédiaire de l'état de service, que les données de réseau sont actuellement en cours de transmission, déterminer, si les données de réseau satisfont à une deuxième condition prédéfinie, que l'état de service satisfait à la première condition prédéfinie ;
un troisième sous-module de détermination (2023), configuré pour, quand il est déterminé, par l'intermédiaire de l'état de service, qu'un programme d'application est actuellement en cours d'exécution, déterminer, si le programme d'application n'est pas un programme d'application spécifié, que l'état de service satisfait à la première condition prédéfinie ;
un quatrième sous-module de détermination (2024), configuré pour, quand il est déterminé, par l'intermédiaire de l'état de service, qu'il n'y a aucune donnée de réseau à transmettre actuellement, déterminer que l'état de service satisfait à la première condition prédéfinie ;
un cinquième sous-module de détermination (2025), configuré pour, quand il est déterminé, par l'intermédiaire de l'état de service, qu'il y a les données de réseau à transmettre actuellement, déterminer, si un intervalle de temps de transmission entre un temps actuel et un temps de début de transmission des données de réseau à transmettre est plus long qu'un intervalle de temps prédéfini, que l'état de service satisfait à la première condition prédéfinie ;
un sixième sous-module de détermination (2026), configuré pour, quand il est déterminé, par l'intermédiaire de l'état de service, qu'une page Web spécifiée n'est actuellement pas ouverte, déterminer que l'état de service satisfait à la première condition prédéfinie ; ou
un septième sous-module de détermination (2027), configuré pour, quand il est déterminé, par l'intermédiaire de l'état de service, que la page Web spécifiée a été actuellement ouverte, déterminer, si un état de page de la page Web spécifiée n'est pas actuellement un état spécifié, que l'état de service satisfait à la première condition prédéfinie.

8. Dispositif selon la revendication 6 ou 7, comprenant en outre :
un premier module de surveillance (204), configuré pour, quand l'état de service ne satisfait pas à la première condition prédéfinie et quand il est déterminé, par l'intermédiaire de l'état de service, que les données de réseau sont actuellement en cours de transmission ou qu'il y a les données de réseau à transmettre, surveiller un processus de transmission des données de réseau ; et
un deuxième module de connexion (205), configuré pour, quand il est surveillé qu'une transmission des données de réseau est finie ou qu'un cycle de transmission des données de réseau est plus long qu'un cycle de transmission prédéfini, réaliser la connexion de réseau par l'intermédiaire du réseau non cellulaire sur la base du signal radio.

9. Dispositif selon la revendication 6 ou 7, comprenant en outre :
un deuxième module de surveillance (206), configuré pour, quand l'état de service ne satisfait pas à la première condition prédéfinie et quand il est déterminé, par l'intermédiaire de l'état de service, que le programme d'application spécifié est actuellement en cours d'exécution, surveiller un état d'exécution du programme d'application spécifié ; et
un troisième module de connexion (207), configuré pour réaliser la connexion de réseau par l'intermédiaire du réseau non cellulaire sur la base du signal radio quand il est surveillé que le programme d'application spécifié arrête d'être exécuté.

10. Dispositif selon la revendication 6 ou 7, comprenant en outre :
un troisième module de surveillance (208), configuré pour, quand l'état de service ne satisfait pas à la première condition prédéfinie et quand il est déterminé, par l'intermédiaire de l'état de service, que la page Web spécifiée a été actuellement ouverte et qu'un état de page de la page Web spécifiée est actuellement l'état spécifié, surveiller l'état de page de la page Web spécifiée ; et
un quatrième module de connexion (209), configuré pour réaliser la connexion de réseau par l'intermédiaire du réseau non cellulaire sur la base du signal radio quand il est surveillé que l'état de page de la page Web spécifiée n'est pas l'état spécifié.

11. Dispositif selon la revendication 6, dans lequel le premier module de connexion (203) comprend :
un sous-module d'association (2031), configuré pour, quand l'état de service satisfait à la première condition prédéfinie, réaliser une association avec le réseau non cellulaire ou une connexion au réseau non cellulaire sur la base du signal radio ;
un sous-module de jugement (2032), configuré pour, en cas de conservation de la connexion du réseau cellulaire, déterminer si le service de données est capable d'être traité par l'intermédiaire du réseau non cellulaire ; et
un premier sous-module de connexion (2033), configuré pour, quand le service de données est capable d'être traité, réaliser un transfert du mode d'accès de réseau du réseau cellulaire au réseau non cellulaire et réaliser la connexion de réseau par l'intermédiaire du réseau non cellulaire sur la base du signal radio.
